# FASCICULE DE BREVET EUROPEEN

(11) **EP 3 085 185 B1**
(45) Date de publication et mention de la délivrance du brevet: **10.07.2019**
(21) Numéro de dépôt: 14803042.2
(22) Date de dépôt: 07.11.2014
(51) Int. Cl.: H04W 40/02, H04W 56/00, H04W 88/04, H04W 72/12, H04W 16/14

(54) **PROCEDE ET SYSTEME DE COMMUNICATION ASYNCHRONE**
ASYNCHRONES ÜBERTRAGUNGSVERFAHREN UND SYSTEM
ASYNCHRONOUS COMMUNICATION METHOD AND SYSTEM

(30) Priorité: 20.12.2013 FR 1303053
(43) Date de publication de la demande: 26.10.2016
(73) Titulaire: AIRBUS DS SAS, 78990 Elancourt (FR)
(72) Inventeur: PISON, Laurent, F-78760 Jouars Ponchartrain (FR); RISY, Frédéric, F-92100 Boulogne Billancourt (FR); LALLET, Arthur, F-02260 La Flamengrie (FR); GROMAT, Hervé, F-78390 Bois d'Arcy (FR)
(74) Mandataire: Cabinet Camus Lebkiri
(86) Numéro de dépôt international: PCT/EP2014/002978
(87) Numéro de publication internationale: WO 2015/090491

(56) Documents cités:
- WO-A1-2014/099297
- FR-A1- 2 979 045
- US-A1- 2011 243 047

## Description

### DOMAINE TECHNIQUE ET OBJET DE L'INVENTION

La présente invention se rapporte au domaine des télécommunications et concerne plus particulièrement un procédé et un système de communication permettant à une pluralité d'équipements d'échanger des données simultanément et de manière asynchrone sur des liens de communication radio sans interférer entre eux.

### ETAT DE LA TECHNIQUE

Un système de télécommunications peut comprendre de manière connue un premier équipement configuré pour émettre un premier signal sur un premier lien de communication radio d'un premier réseau de communication et un deuxième équipement configuré pour recevoir un deuxième signal sur un deuxième lien de communication radio d'un deuxième réseau de communication.

A titre d'exemple, le premier réseau de communication peut être un réseau large-bande de type 3G ou 4G et le deuxième réseau de communication peut être un réseau radio mobile privé (Private Mobile Radio ou PMR en langue anglaise) bande-étroite ou large-bande, utilisé par exemple pour les services publics (police, pompiers, ambulances etc...), ces types de réseaux étant bien connus de l'homme du métier.

Le premier équipement émet le premier signal sur une première bande de fréquences utilisée par le premier réseau de communication et le deuxième équipement reçoit le deuxième signal sur une deuxième bande de fréquences utilisée par le deuxième réseau de communication. De plus, lorsque le deuxième équipement est un équipement PMR (bande-étroite ou large bande), il se contente généralement de surveiller le deuxième lien de communication radio afin de recevoir un deuxième signal.

De nos jours, il est connu d'utiliser des bandes de fréquences radio au moins en partie communes au premier réseau de communication et au deuxième réseau de communication ou très proches les unes des autres.

Dans ce cas, lorsque le premier équipement émet un premier signal sur le premier lien de communication radio, il peut créer des interférences pouvant dégrader un deuxième signal, reçu par le deuxième équipement sur le deuxième lien de communication radio, lorsque le deuxième équipement se trouve à proximité du premier équipement, par exemple lorsqu'ils sont éloignés d'une distance inférieure à 1 mètre voire 5 mètres suivant la puissance d'émission des équipements.

Une solution pour résoudre ce problème consiste à autoriser le premier équipement à émettre un premier signal pendant un premier intervalle de temps connu du deuxième équipement et à autoriser de même le deuxième équipement à recevoir un deuxième signal sur le deuxième lien de communication radio pendant un deuxième intervalle de temps connu du premier équipement et distinct du premier intervalle de temps.

Une telle solution, connue par exemple du document FR2979045, nécessite une synchronisation entre le premier équipement et le deuxième équipement afin que, d'une part, le premier équipement puisse déterminer l'intervalle de temps pendant lequel il peut émettre un premier signal et, d'autre part, le deuxième équipement puisse déterminer l'intervalle de temps pendant lequel il peut recevoir un deuxième signal.

Une telle synchronisation est cependant complexe et coûteuse à mettre en oeuvre, ce qui présente un inconvénient important.

### PRESENTATION GENERALE DE L'INVENTION

La présente invention vise à remédier à cet inconvénient en proposant un procédé de communication permettant au premier équipement d'émettre un premier signal tout en permettant au deuxième équipement de recevoir un signal non dégradé sans qu'il soit nécessaire d'effectuer une synchronisation entre le premier équipement et le deuxième équipement.

A cette fin, l'invention concerne tout d'abord un procédé de communication d'un premier équipement sur un premier lien de communication radio d'un premier réseau de communication, d'une part, et d'un deuxième équipement sur un deuxième lien de communication radio d'un deuxième réseau de communication, d'autre part, les premier et deuxième réseaux de communication utilisant des bandes de fréquence se recouvrant au moins partiellement, ledit procédé comprenant :
- une étape d'émission d'un premier signal par le premier équipement sur le premier lien de communication radio, le premier signal étant destiné à un troisième équipement et comprenant une pluralité de paquets de données;
- une étape d'émission d'un deuxième signal destiné au deuxième équipement par un quatrième équipement sur le deuxième lien de communication radio, le deuxième équipement étant configuré pour recevoir le deuxième signal ;
- une étape de suspension, pendant un intervalle de temps de suspension prédéterminé, de l'émission du premier signal par le premier équipement sur le premier lien de communication radio ; et
- une étape de réception du deuxième signal par le deuxième équipement sur le deuxième lien de communication radio pendant ledit intervalle de temps de suspension ;
ledit procédé étant remarquable en ce que l'émission du deuxième signal a lieu en même temps que l'émission du premier signal et en ce que la suspension de l'émission du premier signal est causée par un stockage, pendant ledit intervalle de temps de suspension, de paquets de données appartenant au premier signal.

Ainsi, avec le procédé selon l'invention, le premier équipement n'émet pas de premier signal sur le premier lien de communication radio pendant l'intervalle de temps de suspension de sorte qu'il ne créé pas d'interférences radio pendant ledit intervalle de temps de suspension pour le deuxième équipement qui peut ainsi recevoir un deuxième signal non dégradé sur le deuxième lien de communication.

Il n'est donc plus nécessaire pour le deuxième équipement de connaître l'intervalle de temps de suspension de sorte que le premier équipement et le deuxième équipement fonctionnent de façon asynchrone. En d'autres termes, le premier équipement et le deuxième équipement n'ont pas besoin d'être synchronisés entre eux et le deuxième équipement n'a notamment pas besoin de connaître les intervalles de temps sur lesquels le premier équipement émet un premier signal sur le premier lien de communication radio.

De préférence, l'intervalle de temps de suspension est prédéterminé pour le premier équipement et/ou est périodique.

De préférence encore, la durée de l'intervalle de temps de suspension est comprise entre quelques millisecondes et quelques centaines de millisecondes, par exemple entre 10 ms à 200 ms.

De manière préférée, le procédé comprend une étape de reprise de l'émission du premier signal par le premier équipement sur le premier lien de communication radio postérieurement à la fin de l'intervalle de temps de suspension.

Selon un autre aspect de l'invention, le premier signal comprenant une pluralité de paquets de données, l'étape de suspension comprend la destruction au moins en partie de ladite pluralité de paquets de données pendant l'intervalle de temps de suspension.

Le stockage et/ou la destruction des paquets de données a pour conséquence la suspension de l'émission du premier signal, c'est-à-dire l'interruption de la transmission radio sur le premier lien de communication radio.

Avantageusement, l'étape de reprise comprend l'émission de la pluralité de paquet de données stockés.

Dans un mode de mise en oeuvre, le procédé comprend, subséquemment à la réception du deuxième signal, une étape d'interruption de l'émission du premier signal pendant un intervalle de temps d'interruption, dont la durée est de préférence plus importante que la durée de l'intervalle de temps de suspension, et, le deuxième équipement étant également configuré pour émettre un troisième signal, une étape d'émission dudit troisième signal par le deuxième équipement pendant ledit intervalle de temps d'interruption.

Ainsi, par exemple, lorsqu'il est nécessaire pour le deuxième équipement de répondre à un message reçu dans le deuxième signal, le premier équipement peut être avantageusement interrompu pendant un intervalle de temps d'interruption correspondant à la durée de l'émission du troisième signal par le deuxième équipement.

L'invention concerne aussi un système de communication comprenant un premier réseau de communication, un premier équipement configuré pour émettre un premier signal sur un premier lien de communication radio dudit premier réseau de communication, un deuxième réseau de communication et un deuxième équipement configuré pour recevoir un deuxième signal sur un deuxième lien de communication radio dudit deuxième réseau de communication, un troisième équipement configuré pour recevoir le premier signal sur le premier lien de communication radio, un quatrième équipement configuré pour émettre le deuxième signal sur le deuxième lien de communication radio en même temps que le premier signal, le premier signal comprenant une pluralité de paquets de données, les premier et deuxième réseaux de communication utilisant des bandes de fréquence se recouvrant au moins partiellement, ledit système étant remarquable en ce qu'il comprend un module de suspension d'émission configuré pour stocker, pendant un intervalle de temps de suspension prédéterminé, des paquets de données appartenant au premier signal de manière à suspendre une émission du premier signal par le premier équipement sur le premier lien de communication radio, le deuxième équipement recevant le deuxième signal sur le deuxième lien de communication radio pendant ledit intervalle de temps de suspension.

Le premier réseau de communication et le deuxième réseau de communication partagent tout ou partie d'une même bande de fréquences ou utilisent des bandes de fréquences proches (i.e. adjacentes).

Le premier réseau de communication peut être un réseau de communication large bande de type 3G (par exemple 3GPP UMTS), 4G (par exemple 3GPP LTEou 3GPP LTE-Advanced), radio mobile privé (PMR) large bande, Wifi etc, ou un réseau de communication bande-étroite, par exemple de type TETRA 450, CDMA 450 etc.

Le deuxième réseau de communication peut être un réseau de communication bande-étroite de type réseau radio mobile privé (Private Mobile Radio ou PMR en langue anglaise), par exemple de type TETRA, TETRA 450, Tetrapol, P25, CDMA 450, etc..., ou un réseau de communication large bande de type réseau radio mobile privé, Wifi, 3G, 4G etc.

Selon un aspect de l'invention, le module de suspension d'émission est configuré pour stocker et/ou détruire des paquets de données, de préférence des paquets de données IP, pendant l'intervalle de temps de suspension.

De préférence, le module de suspension comporte une mémoire tampon pour stocker des paquets de données IP. Le délai éventuellement induit par le remplissage et le vidage d'une telle mémoire sur l'émission du premier signal par le premier équipement n'a pas d'impact sur le deuxième équipement lorsqu'il reste faible étant donné que le premier équipement et le deuxième équipement fonctionnent de manière asynchrone.

De manière préférée, le premier équipement comprend le module de suspension d'émission.

Dans une forme de réalisation du système selon l'invention, le premier équipement et le deuxième équipement sont confondus en un unique équipement.

Dans une forme de réalisation, le premier équipement est un équipement d'utilisateur.

Dans une autre forme de réalisation, le système comprend au moins un cinquième équipement et le premier équipement est un noeud de relais, de préférence mobile, configuré pour recevoir des paquets de données dudit cinquième équipement sur au moins un cinquième lien de communication.

Avantageusement, le noeud de relais comprend un routeur configuré pour aiguiller des paquets de données de ou vers le cinquième équipement.

Le cinquième équipement peut être un équipement d'utilisateur de type téléphone ou ordinateur ou bien un serveur. Le cinquième équipement peut comprendre un routeur configuré pour transmettre des paquets de données, de préférence de type IP. Le cinquième lien de communication peut être un lien de communication sans fil, par exemple de type Wifi, ou bien un lien filaire, par exemple de type Ethernet ou USB connus de l'homme du métier.

Dans une forme de réalisation alternative, le système comprend au moins un cinquième équipement et un sixième équipement, ledit cinquième équipement étant configuré pour envoyer des paquets de données au sixième équipement, le sixième équipement comprenant le module de suspension d'émission et un routeur, configuré pour aiguiller des paquets de données reçus du sixième équipement vers le premier équipement.

D'autres caractéristiques et avantages de l'invention apparaîtront lors de la description qui suit faite en regard des figures annexées données à titre d'exemples non limitatifs et dans lesquelles des références identiques sont données à des objets semblables.

### DESCRIPTION DES FIGURES

La figure 1 illustre une première forme de réalisation du système selon l'invention.
La figure 2 illustre une deuxième forme de réalisation du système selon l'invention.
La figure 3 illustre une troisième forme de réalisation du système selon l'invention.
La figure 4 illustre une quatrième forme de réalisation du système selon l'invention.
La figure 5 illustre une cinquième forme de réalisation du système selon l'invention

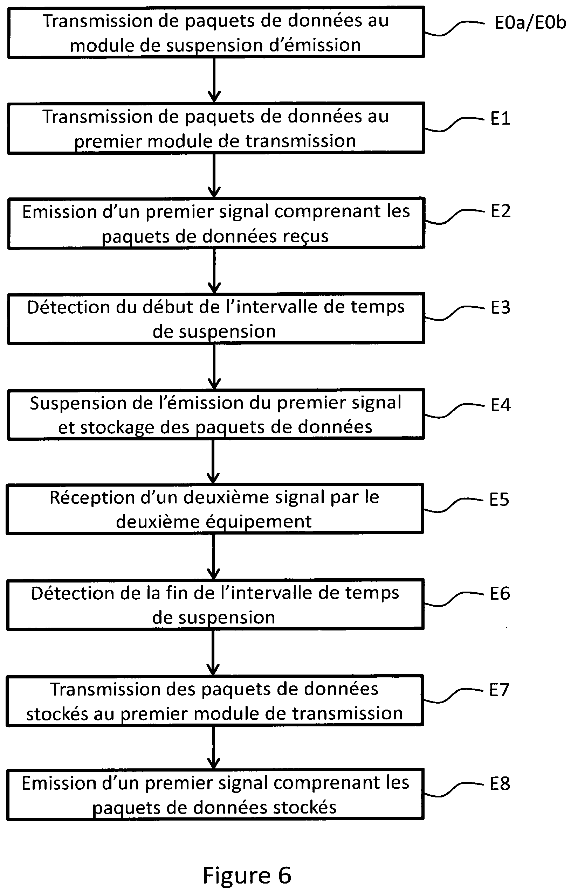

La figure 6 illustre un mode de mise en oeuvre du procédé selon l'invention.

### DESCRIPTION DETAILLEE DE L'INVENTION

### I. Système S selon l'invention

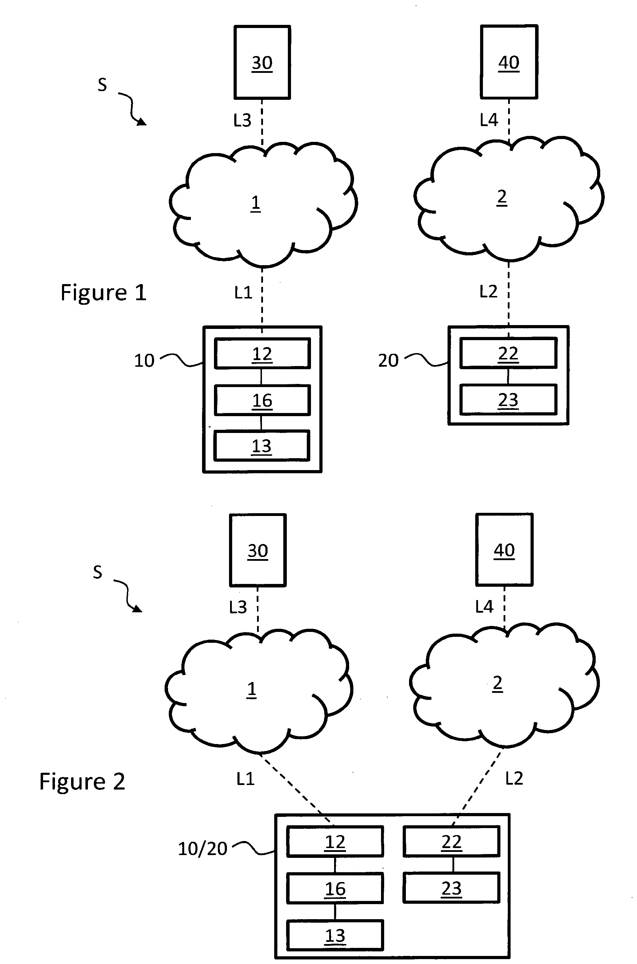

On a représenté aux figures 1 à 5 quatre formes de réalisation du système de communication S selon l'invention.

Dans ces différentes formes de réalisation, le système de communication S comprend un premier réseau de communication 1, un deuxième réseau de communication 2, un premier équipement 10, un deuxième équipement 20, un troisième équipement 30 et un quatrième équipement 40.

Le premier équipement 10 et le troisième équipement 30 sont configurés pour communiquer entre eux via le premier réseau de communication 1. A cette fin, le premier équipement 10 est relié au premier réseau de communication 1 par un premier lien de communication radio L1 et le troisième équipement 30 est relié au premier réseau de communication 1 par un troisième lien de communication radio L3.

De même, le deuxième équipement 20 et le quatrième équipement 40 sont configurés pour communiquer entre eux via le deuxième réseau de communication 2. A cette fin, le deuxième équipement 20 est relié au deuxième réseau de communication 2 par un deuxième lien de communication radio L2 et le quatrième équipement 30 est relié au deuxième réseau de communication 2 par un quatrième lien de communication radio L4.

Dans cet exemple, le premier réseau de communication 1 est un réseau de communication large bande, par exemple de type 3GPP UMTS ou 3GPP LTE ou LTE-Advanced qui communiquent par exemple sur la bande large de fréquences [380, 430] MHz. Un tel premier réseau de communication 1 comprend de manière connue de l'homme du métier une pluralité de stations de base reliées entre elles par des serveurs (non représentés) permettant au premier équipement 10 et au troisième équipement 30 de communiquer.

Le premier équipement 10 comprend un premier module de transmission 12 large-bande comprenant un modem configuré pour émettre et/ou recevoir un premier signal sur le premier lien de communication radio L1 du réseau de communication large-bande 1. Ce premier signal comprend des informations regroupées en paquets de données adaptés pour être acheminés dans le réseau de communication large-bande 1 selon le protocole Internet (Internet Protocol ou IP en langue anglaise). De tels paquets de données sont communément appelés paquets de données IP.

Le premier équipement 10 peut être un équipement d'utilisateur, un noeud de relais ou un simple modem.

Afin de générer ces paquets de données IP, le système S selon l'invention comprend un module de génération 13 de paquets de données IP destinés à être envoyés dans le premier signal.

Le troisième équipement 30 peut être un équipement utilisateur ou bien un serveur, par exemple un serveur d'application, relié au premier réseau de communication 1 et avec lequel le premier équipement 10 peut échanger des paquets de données IP. Un seul troisième équipement 30 a été représenté sur les figures 1 à 5 mais il va de soi qu'une pluralité de troisièmes équipements 30 peut être reliée au premier réseau de communication 1 afin de communiquer avec le premier équipement 10.

Toujours dans cet exemple, le deuxième réseau de communication 2 est un réseau de communication bande-étroite de type réseau radio mobile privé (Private Mobile Radio ou PMR en langue anglaise), par exemple un réseau de communication TETRA ou TETRAPOL. Un tel deuxième réseau de communication 2 comprend de manière connue de l'homme du métier une interface radio permettant au deuxième équipement 20 et au quatrième équipement 40 de communiquer dans un bande de fréquences dite « étroite », par exemple de 2 x 5MHz et comprise dans la bande large de fréquences [380, 430] MHz utilisée par le premier équipement 10 pour communiquer sur le lien de communication radio L1.

Le deuxième équipement 20 comprend un deuxième module de transmission 22 comprenant un modem configuré pour émettre et/ou recevoir un deuxième signal sur un lien de communication radio L2 du réseau de communication bande-étroite 2.

Le deuxième équipement 20 comprend aussi un module de traitement 23 configuré pour traiter un deuxième signal reçu par le deuxième module de transmission 22.

Le deuxième équipement 20 est de préférence un équipement d'utilisateur, sans que cela ne soit limitatif de la portée de la présente invention.

La bande de fréquences bande-étroite utilisée par le deuxième réseau de communication 20 est comprise au moins partiellement dans la bande de fréquences large utilisée par le premier réseau de communication 10.

Le quatrième équipement 40 peut être un équipement d'utilisateur par exemple de type terminal PMR ou terminal dual PMR ou bien une station de base ou encore un noeud de relais radio. Un terminal dual PMR est un unique terminal qui est à la fois configuré pour transmettre un signal large-bande sur un lien de communication radio d'un réseau de communication large-bande et un signal bande-étroite sur un lien de communication radio d'un réseau de communication bande-étroite. Un seul quatrième équipement 40 a été représenté sur les figures 1 à 5 mais il va de soi qu'une pluralité de quatrièmes équipements 40 peut être reliée au deuxième réseau de communication 2 afin de communiquer avec le deuxième équipement 20.

Selon l'invention, le système de communication S comprend un module de suspension d'émission 16 configuré pour suspendre, pendant un intervalle de temps de suspension, une émission d'un premier signal par le premier équipement 10 sur le premier lien de communication radio L1, le deuxième équipement 20 étant alors configuré pour recevoir un deuxième signal sur le deuxième lien de communication radio L2 pendant ledit intervalle de temps de suspension.

La durée de l'intervalle de temps de suspension est de préférence comprise entre 10 ms à 200 ms de manière à permettre la réception d'un deuxième signal tel que, par exemple, un signal d'urgence appelé signal « hors zone » connu de l'homme du métier dans les réseaux de communication PMR.

Dans les formes de réalisation illustrées aux figures 1 à 5, le module de suspension d'émission 16 est configuré pour stocker les paquets de données IP, par exemple dans une mémoire tampon, pendant la durée d'un intervalle de temps de suspension et pour transmettre les paquets de données IP stockés au premier module de transmission 12 après la fin d'un intervalle de temps de suspension.

Le module de suspension d'émission 16 peut aussi être configuré pour détruire tout ou partie des paquets de données IP pendant l'intervalle de temps de suspension.

De préférence, le module de suspension d'émission 16 est configuré pour détecter le début et la fin d'un intervalle de temps de suspension.

Afin d'intercepter les paquets de données IP pour les stocker, le module de suspension d'émission 16 peut comprendre une couche intermédiaire disposée entre le modem (couche matérielle) du premier module de transmission 12 et la pile de protocole Transport Control Protocol/Internet Protocol (TCP/IP) connue de l'homme du métier ou bien peut comprendre une pile TCP/IP modifiée permettant de stocker les paquets de données IP dans une mémoire tampon pendant l'intervalle de temps de suspension.

### a) Première forme de réalisation (figure 1)

Dans cette forme de réalisation, le premier équipement 10 est un équipement d'utilisateur, par exemple de type smartphone, qui comprend le module de suspension d'émission 16 et le module de génération 13 de paquets de données IP.

Le deuxième équipement 20 est un équipement d'utilisateur, par exemple de type terminal PMR.

### b) Deuxième forme de réalisation (figure 2)

Dans cette forme de réalisation, le premier équipement 10 et le deuxième équipement 20 sont confondus en un unique équipement 10/20 se présentant sous la forme d'un terminal dual PMR comprenant le module de suspension d'émission 16.

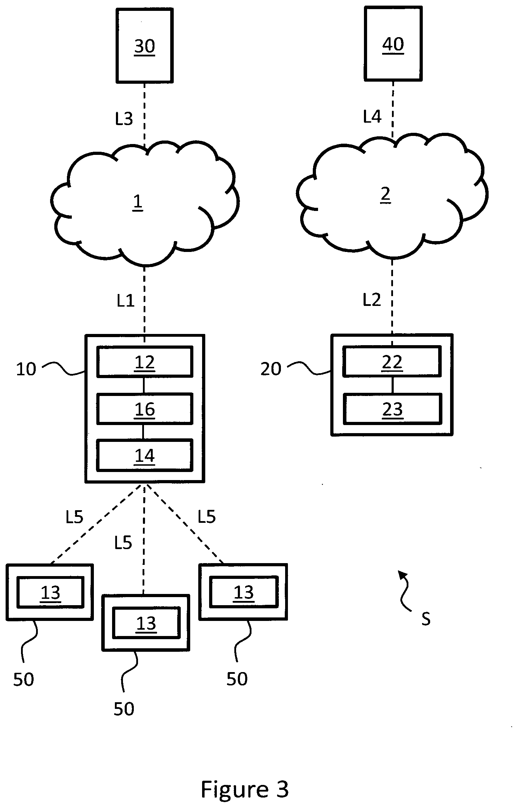

### c) Troisième forme de réalisation (figure 3)

Dans cette forme de réalisation, le premier équipement 10 est un noeud de relais mobile qui comprend le module de suspension d'émission 16 et un module de génération 13 de paquets de données IP.

Le deuxième équipement 20 est un équipement d'utilisateur, par exemple de type terminal PMR.

Le système S comprend une pluralité de cinquièmes équipements 50 et le noeud de relais 10 est configuré pour communiquer avec ladite pluralité de cinquièmes équipements 50 sur une pluralité de cinquièmes liens de communication L5.

Plus précisément, chaque cinquième équipement 50 comprend un module de génération 13 de paquets de données IP et est configuré pour envoyer lesdits paquets au noeud de relais 10 sur un cinquième lien de communication L5 afin que le noeud de relais 10 les transmette, dans un ou plusieurs premiers signaux, sur le lien de communication radio L1 du réseau de communication large-bande 1 à destination du troisième équipement 30.

Les cinquièmes équipements 50 sont de préférence des équipements d'utilisateur, par exemple de type smartphone, PC, tablette etc. Les cinquièmes liens de communication L5 peuvent être des liens filaires, par exemple de type Ethernet bien connu de l'homme du métier, et/ou des liens de communication radio, par exemple de type Wifi également bien connu de l'homme du métier.

Afin d'acheminer les paquets de données IP de ou vers les cinquièmes équipements 50, le noeud de relais 10 comprend un routeur IP 14 connu de l'homme du métier. La pluralité de cinquièmes équipements 50 est par exemple reliée au routeur 14 dans un réseau de type Local Area Network (LAN) ou Wireless Local Area Network (WLAN).

En particulier, ce routeur IP 14 est configuré pour acheminer des paquets de données IP reçus des cinquièmes équipements 50 vers le module de suspension d'émission 16.

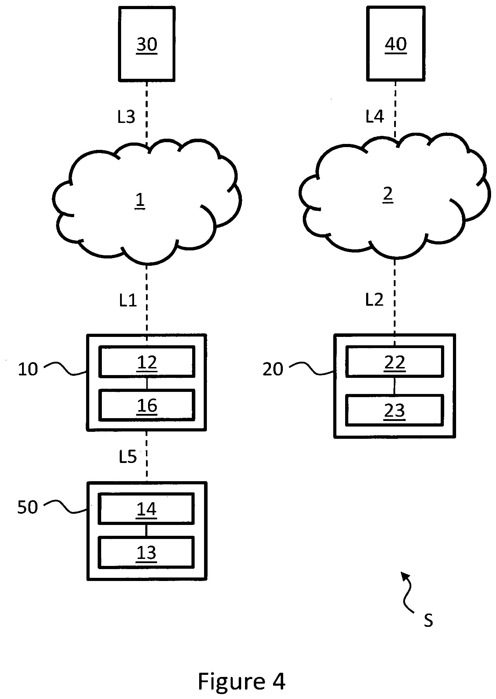

### d) Quatrième forme de réalisation (figure 4)

Dans cette forme de réalisation, le premier équipement 10 est un noeud de relais mobile qui comprend le module de suspension d'émission 16.

Le deuxième équipement 20 est un équipement d'utilisateur, par exemple de type terminal PMR.

Le système S comprend un cinquième équipement 50 et le noeud de relais 10 est configuré pour communiquer avec ledit cinquième équipement 50 sur un cinquième lien de communication L5 qui peut être, par exemple un câble Ethernet ou USB.

Le cinquième équipement 50 comprend un module de génération 13 de paquets de données IP et un routeur IP 14 configuré pour acheminer les paquets de données IP générés par le module de génération 13 vers le premier équipement 10.

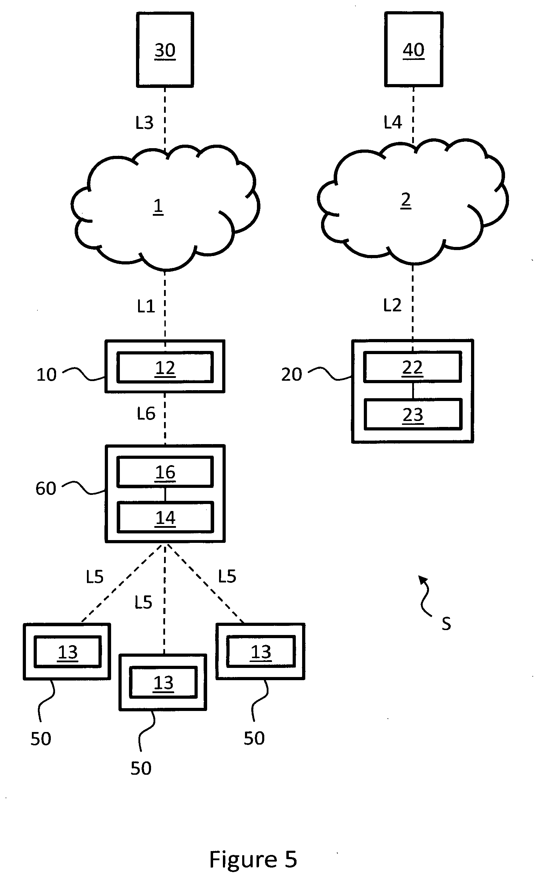

### e) Cinquième forme de réalisation (figure 5)

Dans cette forme de réalisation, le premier équipement 10 est un modem comprenant le premier module de transmission 12.

Le deuxième équipement 20 est un équipement d'utilisateur, par exemple de type terminal PMR.

Le système S comprend une pluralité de cinquièmes équipements 50 et un sixième équipement 60.

La pluralité de cinquièmes équipements 50 est configurée pour communiquer avec ledit sixième équipement 60 sur une pluralité de cinquièmes liens de communication L5.

Plus précisément, chaque cinquième équipement 50 comprend un module de génération 13 de paquets de données IP et est configuré pour envoyer lesdits paquets au noeud de relais 10 sur un cinquième lien de communication L5 afin que le noeud de relais 10 les transmette, dans un ou plusieurs premiers signaux, sur le lien de communication radio L1 du réseau de communication large-bande 1 à destination du troisième équipement 30.

Les cinquièmes équipements 50 sont de préférence des équipements d'utilisateur, par exemple de type smartphone, PC, tablette etc. Les cinquièmes liens de communication L5 peuvent être des liens filaires, par exemple de type Ethernet bien connu de l'homme du métier, et/ou des liens de communication radio, par exemple de type Wifi également bien connu de l'homme du métier.

Afin d'acheminer les paquets de données IP de ou vers les cinquièmes équipements 50, le sixième équipement 60 comprend un routeur IP 14 connu de l'homme du métier. La pluralité de cinquièmes équipements 50 est par exemple reliée au routeur 14 dans un réseau de type Local Area Network (LAN) ou Wireless Local Area Network (WLAN).

En particulier, ce routeur IP 14 est configuré pour acheminer des paquets de données IP reçus des cinquièmes équipements 50 vers le module de suspension d'émission 16.

Le sixième équipement 60 est en outre configuré pour transmettre des paquets de données IP stockés par le module de suspension d'émission 16 au premier équipement 10 sur un sixième lien de communication L6, qui peut être filaire ou sans fil.

### II. Mise en oeuvre de l'invention

Un exemple de mise en oeuvre est décrit ci-après en référence à la figure 5 pour chaque forme de réalisation du système selon l'invention détaillée précédemment.

Dans la première forme et la deuxième forme de réalisation du système selon l'invention, le premier équipement 10 génère, via son module de génération 13, des paquets de données IP destinés à être envoyés au troisième équipement 30 et les transmet dans une étape E0a au module de suspension d'émission 16.

Dans la troisième forme, la quatrième forme et la cinquième formes de réalisation du système selon l'invention, le ou les cinquièmes équipements 50 génèrent, via leur module de génération 13, et envoient, dans une étape E0b, des paquets de données IP, destinés à être envoyés au troisième équipement 30, au routeur 14 qui les transmet au module de suspension d'émission 16.

Dans les cinq formes de réalisation illustrées du système S selon l'invention, le module de suspension d'émission 16 du premier équipement 10 transmet au premier module de transmission 12, dans une étape E1, des paquets de données IP destinés à être envoyés au troisième équipement 30 tant que le début d'un intervalle de temps de suspension n'a pas été détecté.

Le premier module de transmission 12 émet dans une étape E2 un premier signal comprenant lesdits paquets de données IP sur le premier lien de communication radio L1 du réseau de communication large-bande 1 à destination du troisième équipement 30.

Dans une étape E3, le module de suspension d'émission 16 détecte le début d'un intervalle de temps de suspension et stocke, dans une étape E4, les paquets de données IP destinés à être envoyés au troisième équipement 30.

Pendant cet intervalle de suspension, selon l'invention, le premier module d'émission 12 n'émet pas de premier signal sur le premier lien de communication radio L1 du réseau de communication large-bande 1 de sorte que le deuxième équipement 20 peut recevoir, dans une étape E5, sur son deuxième module de transmission 22 un deuxième signal émis par le quatrième équipement 40 sur le deuxième lien de communication radio L2 du deuxième réseau de communication 2 sans que ce deuxième signal ne soit dégradé par des interférences causées par une émission d'un premier signal sur le premier lien de communication radio L1 par le premier équipement 10.

Le module de suspension d'émission 16 détecte ensuite, dans une étape E6, la fin de l'intervalle de temps de suspension puis transmet alors dans une étape E7 les paquets de données IP au premier module de transmission 12 pour qu'il émette dans une étape E8 un premier signal, comprenant lesdits paquets de données IP stockés pendant l'intervalle de temps de suspension, sur le premier lien de communication radio L1 du réseau de communication large-bande 1 à destination du troisième équipement 30.

L'invention permet donc avantageusement à un premier équipement 10 de communication large-bande d'émettre un premier signal par intermittence de sorte qu'un deuxième équipement 20 de communication bande-étroite situé à proximité dudit premier équipement 10 puisse recevoir un deuxième signal non dégradé par des interférences provoquées par l'émission du premier signal par le premier équipement. L'invention est particulièrement avantageuse en ce sens que le premier équipement 10 et le deuxième équipement 20 n'ont pas besoin d'être synchronisés entre eux, ce qui rend le système selon l'invention à la fois simple et efficace.

Lorsque le deuxième équipement 20 reçoit, dans le deuxième signal, un message nécessitant un réponse de sa part, le procédé selon l'invention peut comprendre, subséquemment à la réception dudit deuxième signal, une étape d'interruption de l'émission du premier signal par le premier équipement 10 pendant un intervalle de temps d'interruption et une étape d'émission d'un troisième signal par le deuxième équipement 20 à destination du quatrième équipement 40 pendant ledit intervalle de temps d'interruption.

Cela permet au deuxième équipement 20 de pouvoir communiquer avec le quatrième équipement 40, par exemple en cas d'urgence.

Bien entendu, d'autres modes de réalisation peuvent encore être envisagés. Plus particulièrement, la nature des réseaux, équipements et liens de communications peuvent être différentes de celles décrites sans que cela ne soit limitatif de la portée de la présente invention.

## Revendications

1. Procédé de communication d'un premier équipement (10) sur un premier lien de communication radio (L1) d'un premier réseau de communication (1), d'une part, et d'un deuxième équipement (20) sur un deuxième lien de communication radio (L2) d'un deuxième réseau de communication (2), d'autre part, les premier et deuxième réseaux de communication (1, 2) utilisant des bandes de fréquence se recouvrant au moins partiellement, ledit procédé comprenant :
• une étape (E2) d'émission d'un premier signal par le premier équipement (10) sur le premier lien de communication radio (L1), le premier signal étant destiné à un troisième équipement (30) et comprenant une pluralité de paquets de données;
• une étape d'émission d'un deuxième signal destiné au deuxième équipement (20) par un quatrième équipement (40) sur le deuxième lien de communication radio (L2), le deuxième équipement (20) étant configuré pour recevoir le deuxième signal ;
• une étape (E4) de suspension, pendant un intervalle de temps de suspension prédéterminé, de l'émission du premier signal par le premier équipement (10) sur le premier lien de communication radio (L1) ; et
• une étape (E5) de réception du deuxième signal par le deuxième équipement (20) sur le deuxième lien de communication radio (L2) pendant ledit intervalle de temps de suspension ;
ledit procédé étant **caractérisé en ce que** l'émission du deuxième signal a lieu en même temps que l'émission du premier signal et **en ce que** la suspension de l'émission du premier signal est causée par un stockage, pendant ledit intervalle de temps de suspension, de paquets de données appartenant au premier signal.

2. Procédé selon la revendication précédente, **caractérisé en ce qu'**il comprend une étape (E7) de reprise de l'émission du premier signal par le premier équipement (10) sur le premier lien de communication radio (L1) postérieurement à la fin de l'intervalle de temps de suspension.

3. Procédé selon la revendication précédente, **caractérisé en ce que** l'étape (E7) de reprise comprend l'émission des paquets de données stockés.

4. Procédé selon l'une des revendications précédentes, **caractérisé en ce que** l'étape (E4) de suspension comprend la destruction au moins en partie de ladite pluralité de paquets de données pendant l'intervalle de temps de suspension.

5. Système de communication comprenant un premier réseau de communication (1), un premier équipement (10) configuré pour émettre un premier signal sur un premier lien de communication radio (L1) dudit premier réseau de communication (1), un deuxième réseau de communication (2), un deuxième équipement (20) configuré pour recevoir un deuxième signal sur un deuxième lien de communication radio (L2) dudit deuxième réseau de communication (20), un troisième équipement (30) configuré pour recevoir le premier signal sur le premier lien de communication radio (L1), un quatrième équipement (40) configuré pour émettre le deuxième signal sur le deuxième lien de communication radio (L2) en même temps que le premier signal, le premier signal comprenant une pluralité de paquets de données, les premier et deuxième réseaux de communication (1, 2) utilisant des bandes de fréquence se recouvrant au moins partiellement, ledit système (S) étant **caractérisé en ce qu'**il comprend un module de suspension d'émission (16) configuré pour stocker, pendant un intervalle de temps de suspension prédéterminé, des paquets de données appartenant au premier signal de manière à suspendre une émission du premier signal par le premier équipement (10) sur le premier lien de communication radio (L1), le deuxième équipement (20) recevant le deuxième signal sur le deuxième lien de communication radio (L2) pendant ledit intervalle de temps de suspension.

6. Système selon la revendication précédente, **caractérisé en ce que** le module de suspension d'émission (16) est en outre configuré pour détruire des paquets de données pendant l'intervalle de temps de suspension.

7. Système selon l'une des revendications précédentes 5 et 6, **caractérisé en ce que** le premier équipement (10) comprend le module de suspension d'émission (16).

8. Système selon l'une des revendications précédentes 5 à 7, **caractérisé en ce que** le premier équipement (10) est un noeud de relais, de préférence mobile, et le système (S) comprend au moins un équipement (50), configuré pour envoyer des paquets de données audit noeud de relais (10) sur au moins un lien de communication (L5).

9. Système selon l'une des revendications précédentes 5 et 6, **caractérisé en ce qu'**il comprend au moins un cinquième équipement (50) et un sixième équipement (60), ledit cinquième équipement (60) étant configuré pour envoyer des paquets de données au sixième équipement (60), le sixième équipement (60) comprenant le module de suspension d'émission (16) et un routeur (14) configuré pour aiguiller des paquets de données reçus du sixième équipement (60) vers le premier équipement (10).

## Patentansprüche

1. Übermittlungsverfahren einer ersten Ausrüstung (10) an einen ersten Link zur Funkübermittlung (L1) eines ersten Übermittlungsnetzes (1) einerseits und einer zweiten Ausrüstung (20) an einen zweiten Link zur Funkübermittlung (L2) eines zweiten Übermittlungsnetzes (2) andererseits, wobei das erste und zweite Übermittlungsnetz (1, 2) Frequenzbereiche verwenden, die sich zumindest teilweise überlappen, wobei das genannte Verfahren umfasst:
• einen Sendeschritt (E2) eines ersten Signals durch die erste Ausrüstung (10) an den ersten Link zur Funkübertragung (L1), wobei das erste Signal für eine dritte Ausrüstung (30) bestimmt ist und eine Vielzahl von Datenpaketen umfasst;
• einen Sendeschritt eines zweiten Signals, das für die zweite Ausrüstung (20) bestimmt ist, durch eine vierte Ausrüstung (40) an den zweiten Link zur Funkübertragung (L2), wobei die zweite Ausrüstung (20) konfiguriert ist, um das zweite Signal zu empfangen;
• einen Unterbrechungsschritt (E4) während eines Unterbrechungszeitintervalls des Sendens des ersten Signals durch die erste Ausrüstung (10) an den ersten Link zur Funkübermittlung (L1); und
• einen Empfangsschritt (E5) des zweiten Signals durch die zweite Ausrüstung (20) an den zweiten Link zur Funkübermittlung (L2) während des genannten Unterbrechungszeitintervalls:
wobei das genannte Verfahren **dadurch gekennzeichnet ist, dass** das Senden des zweiten Signals gleichzeitig mit dem Senden des ersten Signals erfolgt und dass die Unterbrechung beim Senden des ersten Signals durch eine Speicherung von zum ersten Signal gehörenden Datenpaketen während des genannten Unterbrechungszeitintervalls verursacht ist.

2. Verfahren gemäß dem voranstehenden Anspruch, **dadurch gekennzeichnet, dass** es einen Wiederaufnahmeschritt (E7) des Sendens des ersten Signals durch die erste Ausrüstung (10) an den ersten Link zur Funkübermittlung (L1) nach Abschluss des Unterbrechungszeitintervalls umfasst.

3. Verfahren gemäß dem voranstehenden Anspruch, **dadurch gekennzeichnet, dass** der Wiederaufnahmeschritt (E7) das Senden der gespeicherten Datenpakete umfasst.

4. Verfahren gemäß einem der voranstehenden Ansprüche, **dadurch gekennzeichnet, dass** der Unterbrechungsschritt (E4) die wenigstens teilweise Zerstörung der genannten Vielzahl von Datenpaketen während des Unterbrechungszeitintervalls umfasst.

5. Übermittlungssystem, umfassend ein erstes Übermittlungsnetz (1), eine erste Ausrüstung (10), die konfiguriert ist, um ein erstes Signal an einen ersten Link zur Funkübermittlung (L1) des genannten ersten Übermittlungsnetzes (1) zu senden, ein zweites Übermittlungsnetz (2), eine zweite Ausrüstung (20), die konfiguriert ist, um ein zweites Signal an einen zweiten Link zur Funkübermittlung (L2) des genannten zweiten Übermittlungsnetzes (20) zu empfangen, eine dritte Ausrüstung (30), die konfiguriert ist, um das erste Signal an dem ersten Link zur Funkübermittlung (L1) zu empfangen, eine vierte Ausrüstung (40), die konfiguriert ist, um das zweite Signal an den zweiten Link zur Funkübermittlung (L2) gleichzeitig wie das erste Signal zu senden, wobei das erste Signal eine Vielzahl von Datenpaketen umfasst, wobei das erste und zweite Übermittlungsnetz (1, 2) Frequenzbereiche verwenden, die sich wenigstens teilweise überlappen, wobei das genannte System (S) **dadurch gekennzeichnet ist, dass** es ein Sende-Unterbrechungsmodul (16) umfasst, das konfiguriert ist, um während eines vorbestimmten Unterbrechungszeitintervalls Datenpakete zu speichern, die zu dem ersten Signal derart gehören, dass ein Senden des ersten Signals durch die erste Ausrüstung (10) an den ersten Link zur Funkübermittlung (L1) unterbrochen ist, wobei die zweite Ausrüstung (20) das zweite Signal während des genannten Unterbrechungszeitintervalls an dem zweiten Link zur Funkübermittlung (L2) empfängt.

6. System gemäß dem voranstehenden Anspruch, **dadurch gekennzeichnet, dass** das Sende-Unterbrechungsmodul (16) darüber hinaus konfiguriert ist, um Datenpakete während des Unterbrechungszeitintervalls zu zerstören.

7. System gemäß einem der voranstehenden Ansprüche 4 und 6, **dadurch gekennzeichnet, dass** die erste Ausrüstung (10) das Sende-Unterbrechungsmodul (16) umfasst.

8. System gemäß einem der voranstehenden Ansprüche 5 bis 7, **dadurch gekennzeichnet, dass** die erste Ausrüstung (10) ein bevorzugt mobiler Relaisknoten ist und das System (S) wenigstens eine Ausrüstung (50) umfasst, die konfiguriert ist, um Datenpakete an den genannten Relaisknoten (10) über wenigstens einen Übermittlungslink (L5) zu senden.

9. System gemäß einem der voranstehenden Ansprüche 5 und 6, **dadurch gekennzeichnet, dass** es wenigstens eine fünfte Ausrüstung (50) und eine sechste Ausrüstung (60) umfasst, wobei die genannte fünfte Ausrüstung (60) konfiguriert ist, um Datenpakete an die sechste Ausrüstung (60) zu senden, wobei die sechste Ausrüstung (60) das Sende-Unterbrechungsmodul (16) und einen Router (14) umfasst, der konfiguriert ist, um von der sechsten Ausrüstung (60) empfangene Datenpakete an die erste Ausrüstung (10) zu leiten.

## Claims

1. Communication method of a first device (10) over a first radio communication link (L1) of a first communication network (1), on the one hand, and of a second device (20) over a second radio communication link radio (L2) of a second communication network (2), on the other hand, the first and second communication networks (1, 2) using frequency bands that overlap at least partially, said method comprising:
∘ a step (E2) of transmitting a first signal by the first device (10) over the first radio communication link (L1), the first signal being intended for a third device (30) and comprising a plurality of data packets;
∘ a step of transmitting a second signal intended for the second device (20) by a fourth device (40) over the second radio communication link (L2), the second device (20) being configured to receive the second signal;
∘ a step (E4) of suspending, during a predetermined suspension time interval, of the transmitting of the first signal by the first device (10) over the first radio communication link (L1); and
∘ a step (E5) of receiving the second signal by the second device (20) over the second radio communication link (L2) during said suspension time interval;
said method being **characterised in that** the transmission of the second signal takes place at the same time as the transmission of the first signal and **in that** the suspension of the transmitting of the first signal is caused by a storage, during said suspension time interval, of data packets belonging to the first signal.

2. Method according to the preceding claim, **characterised in that** it comprises a step (E7) of resuming of the transmitting of the first signal by the first device (10) over the first radio communication link (L1) after the end of the suspension time interval.

3. Method according to the preceding claim, **characterised in that** the step (E7) of resuming comprises the transmitting of the stored data packets.

4. Method according to one of the preceding claims, **characterised in that** the step (E4) of suspending comprises the destruction at least partially of said plurality of data packets during the suspension time interval.

5. Communication system comprising a first communication network (1), a first device (10) configured to transmit a first signal over a first radio communication link (L1) of said first communication network (1), a second communication network (2), a second device (20) configured to receive a second signal over a second radio communication link radio (L2) of said second communication network (20), a third device (30) configured to receive the first signal over the first radio communication link (L1), a fourth device (40) configured to transmit the second signal over the second radio communication link (L2) at the same time as the first signal, the first signal comprising a plurality of data packets, the first and second communication networks (1, 2) using frequency bands that overlap at least partially, said system (S) being **characterised in that** it comprises a transmission suspension module (16) configured to store, during a predetermined suspension time interval, data packets belonging to the first signal in such a way as to suspend a transmission of the first signal by the first device (10) over the first radio communication link (L1), the second device (20) receiving the second signal over the second radio communication link (L2) during said suspension time interval.

6. System according to the preceding claim, **characterised in that** the transmission suspension module (16) is further configured to destroy data packets during the suspension time interval.

7. System according to one of the preceding claims 5 and 6, **characterised in that** the first device (10) comprises the transmission suspension module (16).

8. System according to one of the preceding claims 5 to 7, **characterised in that** the first device (10) is a relay node, preferably mobile, and the system (S) comprises at least one device (50), configured to send data packets to said relay node (10) over at least one communication link (L5).

9. System according to one of the preceding claims 5 and 6, **characterised in that** it comprises at least one fifth device (50) and a sixth device (60), said fifth device (60) being configured to send data packets to the sixth device (60), the sixth device (60) comprising the transmission suspension module (16) and a router (14) configured to route data packets received from the sixth device (60) to the first device (10).
